# EUROPÄISCHE PATENTSCHRIFT

(11) **EP 1 925 754 B1**
(45) Veröffentlichungstag und Bekanntmachung des Hinweises auf die Patenterteilung: **23.12.2009**
(21) Anmeldenummer: 07018617.6
(22) Anmeldetag: 21.09.2007
(51) Int. Cl.: E02F 9/02, E02F 9/08, B60F 1/04, B61D 15/00

(54) **Zweiwegebagger**
Rail-road excavator
Excavatrice combinée route-rail

(30) Priorität: 21.11.2006 DE 202006017727 U
(43) Veröffentlichungstag der Anmeldung: 28.05.2008
(73) Patentinhaber: Liebherr-Hydraulikbagger GmbH, 88457 Kirchdorf/Iller (DE)
(72) Erfinder: Dreher, Gerhard, 87727 Babenhausen (DE)
(74) Vertreter: Laufhütte, Dieter

(56) Entgegenhaltungen:
- EP-A- 0 556 161
- EP-A- 1 182 302
- WO-A-98/43838
- WO-A-2005/090122
- DE-U1- 9 417 652
- US-A- 3 945 326

## Beschreibung

Die Erfindung betrifft einen Zweiwegebagger mit einem Unterwagen mit mindestens zwei Achsen mit Rädern für die Straßenfahrt und zwei in Betriebsposition schwenkbaren Achsen mit Rädern für die Schienenfahrt.

Derartige Zweiwegebagger sind multifunktional einsetzbar. Zum einen sind sie wie ein üblicher Mobilbagger als Radfahrzeug straßentauglich und können unabhängig und eigenständig zu ihrem Einsatzort fahren. Durch entsprechendes Ausfahren der mit den Rädern für die Schienenfahrt ausgestatteten Achsen kann der Zweiwegebagger in sehr einfacher Art und Weise zu einem Schienenfahrzeug umfunktioniert werden. Der Antrieb erfolgt durch die angetriebenen Straßenräder, die wahlweise auf der Schiene, oder direkt auf den Schienenrädern abrollen. Die Führung des Zweiwegebaggers erfolgt über die Schienenräder.

In Deutschland ist im Rahmen der Straßenverkehrsordnung die Achslast von Mobilbaggern zur Erlangung einer uneingeschränkten - das heißt nicht streckengebundenen - Fahrerlaubnis beschränkt. Bei angetriebenen Achsen ist die maximale Achslast derzeit 11,5 t und bei nicht angetriebenen Achsen 10 t. Das maximal zulässige Baggergewicht für Straßenfahrten ist bei zwei Achsen auf 18 t begrenzt.

EP 0 556 161 offenbart einen Zweiwegebagger des Fahrzeuges mit seinen eigenen Bewegungsrädern, wobei der Zweiwegebagger zwei Achsen mit dem Schienenräderpaar umfasst, damit der Fahrzeug auf den Schienen einer Bahnstrecke fahren kann. Wenn das Fahrzeug mit seinen eigenen Bewegungsrädern fährt, besetzen die zwei Achsen mit dem Schienenräderpaar eine erhöhte Position. Wenn das Fahrzeug auf den Schienen einer Bahnstrecke fährt, werden die Achsen nach unten verschwenkt.

In WO 2005/090122 ist eine Vorrichtung zum Transportieren einer mit einem Raupenfahrwerk ausgestatteten, einen Räumschild aufweisenden, selbstfahrenden Baumaschinen, insbesondere eines Raupenbaggers, mit einem von der Baumaschine her angetriebenen Räderfahrwerk beschrieben. Zum raschen Transport der Baumaschine von einem Einsatzort zum anderen müssen lediglich das Räderfahrwerk an des Räumschild angekuppelt, sowie Räumschild und Laufrad in die Fahrstellung verlagert und gegebenenfalls Hydraulikanschlüsse für den Fahrantrieb der an den Räumschild kuppelbaren Räder an die Baumaschine angeschlossen werden, bevor die Baumaschine mit dem Räderfahrwerk verfahren werden kann.

In US 3 945 326 ist ein Fahrzeug beschrieben, das sowohl straßentauglich als auch schienentauglich ist. In dem Fahrzeug umfaßt das Fahrwerk zwei Radachsen, wobei die inneren Enden der beiden Radachsen mit dem Winkelanschluss angekoppelt werden. Ein Schienenräderpaar und ein Gummireifenräderpaar werden an den äußeren Enden der beiden Radachsen montiert. Befindet sich der Winkelanschluss in einer gesenkte Position, ist das Gummireifenräderpaar außer Betrieb und fährt das Fahrzeug mit dem Schienenräderpaar, und dann umgekehrt, wenn der Winkelanschluss eine erhöhte Position einnimmt.

Aus der EP 1 619 314 A1 der gleichen Anmelderin ist es nun bereits bekannt, an einem Mobilbagger mindestens einen Rollwagen bzw. Dolly anzukoppeln. Hierüber werden neue zusätzliche Achslinien zu den beiden vorhandenen Achsen am Mobilbagger geschaffen, der dadurch mit einem Gesamtgewicht über 18 t auf öffentlichen Verkehrswegen betrieben werden kann, da sich die Achslast nunmehr auf drei und mehr Achsen verteilt.

Nachdem auch Zweiwegebagger mit höherem Einsatzgewicht straßentauglich sein sollen, besteht die vorliegende Aufgabe der Erfindung darin, einen gattungsgemäßen Zweiwegebagger derart weiterzubilden, dass eine oder mehrere Zusatzachsen bei Straßenfahrt in einfacher Weise an dem Zweiwegebagger anbaubar sind.

Erfindungsgemäß wird diese Aufgabe ausgehend von einem bekannten Zweiwegebagger dadurch gelöst, dass die zur Umrüstung auf die Schienenfahrt beim Zweiwegebagger vorhandenen schwenkbaren Achsen wahlweise für die Straßenfahrt umrüstbar sind. Die zusätzlich vorhandenen schwenkbaren Achsen, die eigentliche für die Schienenfahrt dienen, werden entsprechend der vorliegenden Erfindung hier bedarfsweise auch für die Straßenfahrt nutzbar gemacht.

Besondere Ausgestaltungen der Erfindung ergeben sich aus den sich an den Hauptanspruch anschließenden Unteransprüchen.

Demnach kann gemäß einer bevorzugten Ausgestaltung der Erfindung mit den schwenkbaren Achsen ein Anbaurahmen mit mindestens einer zusätzlichen Achse verbindbar sein, die mindestens ein Rad für die Straßenfahrt trägt.

Aufgrund dieses starr an die bewegbare Achse anbaubaren Anbaurahmens wird die zusätzliche Fahrachse für die Straßenfahrt soweit vom Unterwagen weg plaziert, dass die zusätzliche Anbauachse auch nach den gesetzlichen Vorschriften der Straßenverkehrsordnung als eigene unabhängige Achse geführt wird.

Vorzugsweise ist der Anbaurahmen gabelförmig ausgebildet.

An den freien Enden der Träger des gabelförmigen Anbaurahmens können vorteilhaft Ausnehmungen vorhanden sein, die die schwenkbaren Achsen im Anbauzustand zumindest teilweise umgreifen. Weiterhin können zusätzlich Bohrungen am Anbaurahmen vorgesehen sein, über die er mit der schwenkbaren Achse verbolzbar ist. Der Anbaurahmen kann einen Querträger aufweisen, in dem die Achse gelagert ist, die an ihrem Enden jeweils die Räder für die Straßenfahrt trägt.

Gemäß einer anderen einfach bauenden Alternative können die Räder für die Straßenfahrt unmittelbar auf die Räder für die Schienenfahrt aufsetzbar sein. Dabei können die Räder für die Straßenfahrt Felgen aufweisen, die auf die Räder für die Schienenfahrt aufsetzbar und mit diesen verbindbar sind.

Die in die Betriebsposition schwenkbaren Achsen können jeweils am vorderen und hinteren Ende des Unterwagens verschwenkbar angelenkt sein und sind über Hydraulikzylinderanordnungen in die Betriebsposition abschwenkbar und aus dieser heraus hochschwenkbar.

Diesen bereits für die Umrüstung auf die Schienenfahrt vorhandenen Schwenkmechanismus nutzt die vorliegende Erfindung für die vorzusehende Zusatzachse aus. Dabei kann eine zusätzliche Achse für die Straßentauglichkeit eines vergleichsweise schwereren Zweiwegebaggers ausreichen, also es kann entweder am Vorderteil des Unterwagens oder am Hinterteil des Unterwagens die Zusatzachse für die Straßenfahrt zugerüstet werden. Bei Bedarf können aber auch entsprechende Zusatzachsen für die Straßenfahrt sowohl am Vorder- wie auch am Hinterteil des Mobilbaggers zugerüstet werden.

Weitere Merkmale, Einzelheiten und Vorteile der Erfindung ergeben sich aus einem in der Zeichnung dargestellten Ausführungsbeispiel. Es zeigen:
- Figur 1:: eine perspektivische Darstellung eines - teilweise explosionsartig auseinandergezogen - Zweiwegebaggerunterwagens nach einer ersten Ausführungsform der Erfindung und
- Figur 2:: eine perspektivische Darstellung eines Unterwagens entsprechend der Figur 1 in einer zweiten Ausführungsform der Erfindung.

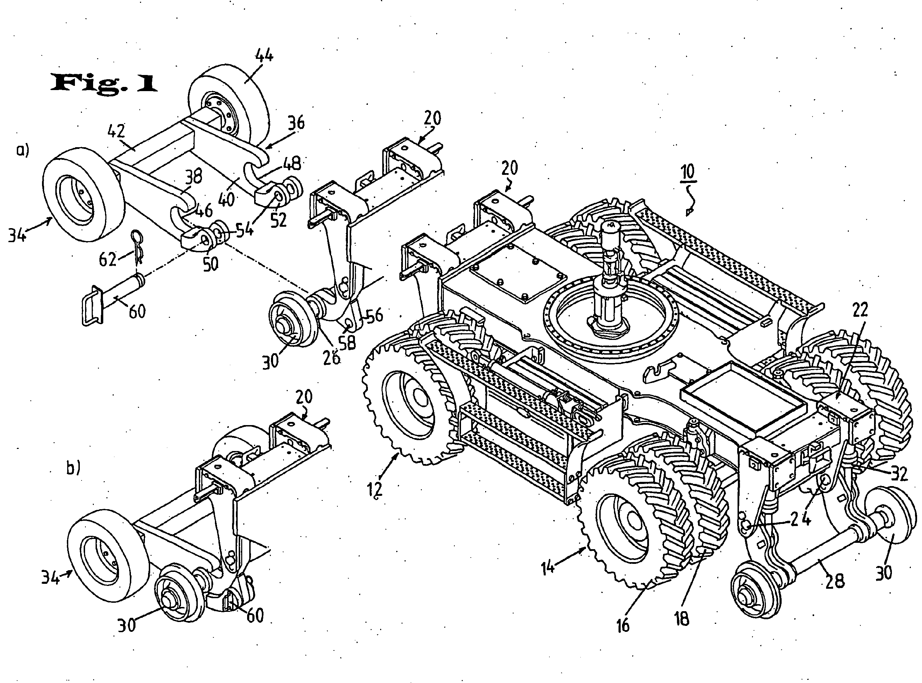

In Figur 1 ist ein Unterwagen 10 eines in seinem Aufbau an sich bekannten Zweiwegebaggers gezeigt. Der hier nicht dargestellte Oberwagen ist in üblicher Weise aufgebaut und bedarf daher hier keiner weiteren Erläuterung.

Der Unterwagen 10 weist zwei Achsen 12 und 14 auf, die jeweils mit Zwillingsrädern 16, 18 für die Straßenfahrt ausgerüstet sind. Die Achse 12 ist als Starrachse ausgelegt, während die Achse 14 eine gelenkte Achse ist. Wie es schon bei Zweiwegebaggern bekannt ist, sind an beiden freien Enden, also an der Vorderseite und an der Hinterseite des Unterwagens 10 Anbauten 20 und 22 angeordnet, die zusätzliche um Schwerpunkte 24 schwenkbare Achsen 26 und 28 zutragen. Die Achsen 26 und 28 tragen wiederum Räder 30 für die Schienenfahrt. Die Achsen 26 und 28 sind jeweils über Hydraulikzylinder 32 verschwenkbar. In Figur 1 sind die Achsen 26 und 28 in ausgeschwenkter Position, das heißt Fahrposition, gezeigt. Über die Hydraulikzylinder 32 können sie um die Schwenkachsen 24 nach oben verschwenkt werden. In diesem Fall ist der Zweiwegebagger dann für die Straßenfahrt bereit.

In der Figur 1 ist mit a und b jeweils der vordere Anbau 20 in zwei unterschiedlichen Bauversionen dargestellt. Entsprechend der hier vorliegenden Erfindung kann der Zweiwegebagger durch Anbau einer Achse 34 für die Straßenfahrt derart umgerüstet werden, dass auch ein Zweiwegebagger mit einem Fahrgewicht von über 18 t ohne Sondererlaubnis straßenfahrtauglich ist. Gemäß der hier vorliegenden Ausführungsform ist die schwenkbare Achse 26 zur Straßenfahrt umrüstbar. Im in Figur 1 dargestellten Ausführungsbeispiel wird hierzu die zusätzliche Achse 34 für die Straßenfahrt über einen Anbaurahmen 36 an die Achse 26 angebaut.

Der Anbaurahmen 36 weist zwei Träger 38 und 40 sowie einen Querträger 42 auf. Die zusätzliche Achse 34 ist in dem Querträger 42 gelagert. An den jeweiligen Enden der Achse 34 sind Räder 44 für die Straßenfahrt angeordnet.

Wie in den Figuren 1 a und 1 b gezeigt kann der Anbaurahmen 36 in einfacher Art und Weise an die schwenkbare Achse 26 angebaut werden. Hierzu sind an den freien Enden der Träger 38 und 40 jeweils Ausnehmungen 46 und 48 vorgesehen, die die schwenkbaren Achsen 26 in Anbauzustand (vgl. Figur 1b) zumindest teilweise umgreifen. Gleichzeitig sind an den freien Enden der Träger gabelartige Vorsprünge 50 und 52, in denen Bohrungen 54 vorgesehen sind, angeordnet. Die gabelartigen Vorsprünge 50 und 52 umgreifen im eingebauten Zustand einen am Anbau 20 vorgesehenen Vorsprung 56, der ebenfalls eine Bohrung 58 aufweist. Über einen Bolzen 60 kann im angebauten Zustand der Anbaurahmen 36 mit der schwenkbaren Achse 26 fest verbunden werden. In üblicher Weise kann der Bolzen in eingesteckter Position über einen Sicherheitssplint 62 vor dem Herausfallen gesichert werden. In Figur 1 b ist der eingebaute Zustand gezeigt.

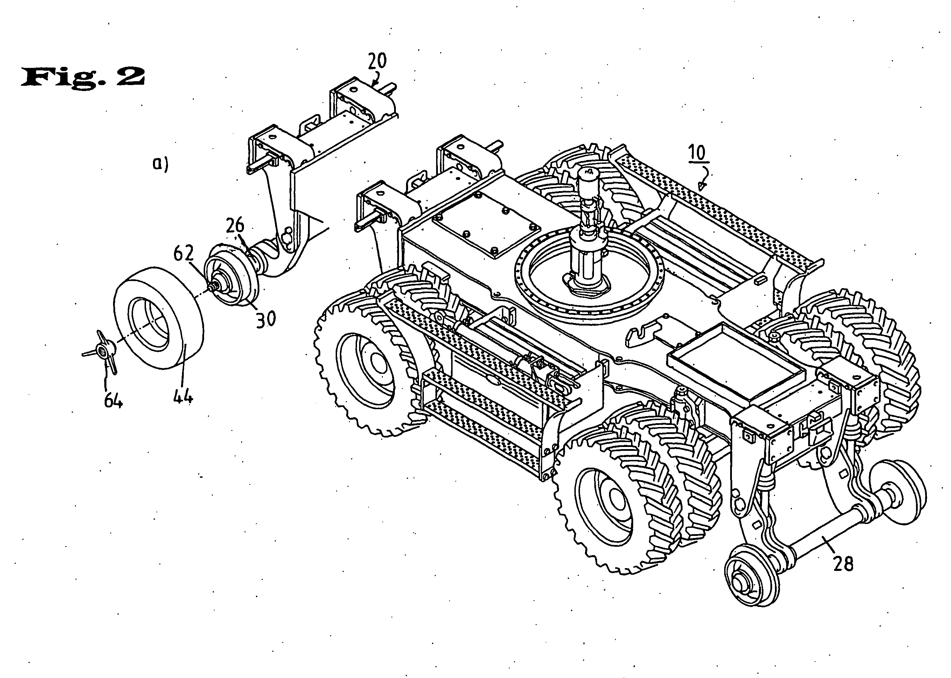

Eine alternative Ausführungsvariante des erfindungsgemäßen Zweiwegebaggers ergibt sich aus der Figur 2.

Hier ist der Unterwagen 10 in gleicher Weise aufgebaut wie im Ausführungsbeispiel gemäß Figur 1, so dass hier auf die dortigen Ausführungen verwiesen werden kann.

Im hier dargestellten Ausführungsbeispiel werden die Räder 44 unmittelbar auf die Räder für die Schienenfahrt 30 aufgesetzt, so dass keine zusätzlichen Achsen für die Straßenfahrt eingebaut werden müssen. Vielmehr können die bereits vorhandenen Achsen 26 bzw. gegebenenfalls 28 verwendet werden. In hier nicht näher im Detail dargestellten Art und Weise sind die Felgen der Räder 44 für die Straßenfahrt derart ausgebildet, dass sie auf die Räder für die Schienenfahrt 30 aufsetzbar sind. Im hier dargestellten Ausführungsbeispiel ist an dem Rad für die Schienenfahrt 30 eine Schraubnabe 62 dargestellt, auf die eine Sicherungsmutter 64 aufschraubbar ist, um das Rad für die Straßenfahrt 44 auf dem Rad für die Schienenfahrt 30 zu befestigen. Selbstverständlich kann jede denkbare Art für ein Aufsetzen des Rads 44 auf das Rad 30 im Rahmen der Erfindung zur Anwendung kommen

## Patentansprüche

1. Zweiwegebagger mit einem Unterwagen (10) mit mindestens zwei Achsen (12, 14) mit Rädern (16, 18) für die Straßenfahrt und zwei in Betriebsposition schwenkbaren Achsen (26, 28) mit Rädern (30) für die Schienenfahrt,
**dadurch gekennzeichnet,**
**dass** die schwenkbaren Achsen (26, 28) wahlweise für die Straßenfahrt umrüstbar sind.

2. Zweiwegebagger nach Anspruch 1, **dadurch gekennzeichnet, dass** mit den schwenkbaren Achsen (26, 28) ein Anbaurahmen (36) mit mindestens einer zusätzlichen Achse (34) verbindbar ist, die mindestens ein Rad (44) für die Straßenfahrt trägt.

3. Zweiwegebagger nach Anspruch 2, **dadurch gekennzeichnet, dass** der Anbaurahmen (36) gabelförmig ausgebildet ist.

4. Zweiwegebagger nach einem der Ansprüche 2 oder 3, **dadurch gekennzeichnet, dass** an den freien Enden der Träger (38, 40) des gabelförmigen Anbaurahmens (36) Ausnehmungen (46, 48) vorhanden sind, die die schwenkbaren Achsen (26, 28) im Anbauzustand zumindest teilweise umgreifen, und dass zusätzlich Bohrungen (54) am Anbaurahmen (36) vorgesehen sind, über die er mit der schwenkbaren Achse (26, 28) verbolzbar ist.

5. Zweiwegebagger nach einem der Ansprüche 2 bis 4, **dadurch gekennzeichnet, dass** der Anbaurahmen (36) einen Querträger (42) aufweist, in dem die Achse (34) gelagert ist, die an ihren Enden jeweils die Räder (44) für die Straßenfahrt trägt.

6. Zweiwegebagger nach Anspruch 1, **dadurch gekennzeichnet, dass** die Räder (44) für die Straßenfahrt unmittelbar auf die Räder (30) für die Schienenfahrt aufsetzbar sind.

7. Zweiwegebagger nach Anspruch 6, **dadurch gekennzeichnet, dass** die Räder (44) für die Straßenfahrt Felgen aufweisen, die auf die Räder (30) für die Schienenfahrt aufsetzbar und mit diesen verbindbar sind.

8. Zweiwegebagger nach einem der Ansprüche 1 bis 7, **dadurch gekennzeichnet, dass** die in die Betriebsposition schwenkbaren Achsen (26, 28) jeweils am vorderen und hinteren Ende des Unterwagens (10) verschwenkbar angelenkt sind und über Hydraulikzylinderanordnungen (32) in die Betriebsposition abschwenkbar und aus dieser heraus hochschwenkbar sind.

## Claims

1. Rail-road excavator having an undercarriage (10) comprising at least two axles (12, 14) with wheels (16, 18) for road travel and comprising two axles (26, 28) which can be pivoted into an operating position and which have wheels (30) for rail travel,
**characterized**
**in that** the pivotable axles (26, 28) may optionally be converted for road travel.

2. Rail-road excavator according to Claim 1, **characterized in that** a mounting frame (36) can be connected to the pivotable axles (26, 28), which mounting frame (36) has at least one additional axle (34) which supports at least one wheel (44) for road travel.

3. Rail-road excavator according to Claim 2, **characterized in that** the mounting frame (36) is of fork-shaped design.

4. Rail-road excavator according to one of Claims 2 or 3, **characterized in that** recesses (46, 48) are provided on the free ends of the members (38, 40) of the fork-shaped mounting frame (36), which recesses (46, 48), in the mounted state, engage at least partially around the pivotable axles (26, 28), and **in that** bores (54) are additionally provided on the mounting frame (36), by means of which bores (54) said mounting frame (36) can be bolted to the pivotable axle (26, 28).

5. Rail-road excavator according to one of Claims 2 to 4, **characterized in that** the mounting frame (36) has a cross member (42) in which is mounted the axle (34) which, at its ends, supports in each case the wheels (44) for road travel.

6. Rail-road excavator according to Claim 1, **characterized in that** the wheels (44) for road travel can be placed directly onto the wheels (30) for rail travel.

7. Rail-road excavator according to Claim 6, **characterized in that** the wheels (44) for road travel have rims which can be placed onto and connected to the wheels (30) for rail travel.

8. Rail-road excavator according to one of Claims 1 to 7, **characterized in that** the axles (26, 28), which can be pivoted into the operating position, are pivotably articulatedly connected in each case to the front and rear ends of the undercarriage (10) and can be pivoted down into the operating piston, and pivoted up out of said operating position, by means of hydraulic cylinder arrangements (32).

## Revendications

1. Excavatrice combinée route-rail dotée d'un châssis de wagon (10) avec au moins deux essieux (12, 14) dotés de roues (16, 18) pour le déplacement sur routes et deux essieux pivotables en position de service (26, 28) dotés de roues (30) pour le déplacement sur rails,
**caractérisée en ce que**,
les essieux pivotables (26, 28) sont rééquipables au choix pour le déplacement sur routes.

2. Excavatrice combinée route-rail selon la revendication 1, **caractérisée en ce qu'**avec les essieux pivotables (26, 28), un cadre rapporté (36) est reliable avec au moins un essieu supplémentaire (34) portant au moins une roue (44) pour le déplacement sur routes.

3. Excavatrice combinée route-rail selon la revendication 2, **caractérisée en ce que** le cadre rapporté (36) est développé en forme fourchue.

4. Excavatrice combinée route-rail selon une quelconque des revendications 2 ou 3, **caractérisée en ce que**, aux extrémités libres des supports (38, 40) du cadre rapporté en forme fourchue (36), des creux (46, 48) sont présents, qui enveloppent au moins partiellement les essieux pivotables (26, 28) à l'état rapporté, et **en ce que** des alésages (54) sont prévus de manière supplémentaire sur le cadre rapporté (36), par l'intermédiaire desquels il est boulonnable avec les essieux pivotables (26, 28).

5. Excavatrice combinée route-rail selon une quelconque des revendications 2 à 4, **caractérisée en ce que** le cadre rapporté (36) présente une entretoise transversale (42), dans laquelle est logé l'essieu (34) portant respectivement à ses extrémités les roues (44) pour le déplacement sur routes.

6. Excavatrice combinée route-rail selon la revendication 1, **caractérisée en ce que** les roues (44) pour le déplacement sur routes sont posables directement sur les roues (30) pour le déplacement sur rails.

7. Excavatrice combinée route-rail selon la revendication 6, **caractérisée en ce que** les roues (44) pour le déplacement sur routes présentent des jantes, qui sont posables sur les roues (30) pour le déplacement sur rails et reliables avec celles-ci.

8. Excavatrice combinée route-rail selon une quelconque des revendications 1 à 7, **caractérisée en ce que** les essieux pivotables en position de service (26, 28) sont articulés de manière pivotable respectivement sur l'extrémité avant et arrière du châssis de wagon (10) et qu'ils sont basculables par l'intermédiaire de dispositions à vérins hydrauliques (32) dans la position de service et basculables vers le haut hors de celle-ci.
